# EUROPÄISCHE PATENTSCHRIFT

(11) **EP 1 384 643 B1**
(45) Veröffentlichungstag und Bekanntmachung des Hinweises auf die Patenterteilung: **31.08.2005**
(21) Anmeldenummer: 03017865.1
(22) Anmeldetag: 09.06.2000
(51) Int. Cl.: B62D 1/18, B62D 1/19

(54) **Lenksäule und Verstellverfahren für eine Lenksäule**
Steering column and method for adjusting a steering column
Colonne de direction et procédé de réglage d'une colonne de direction

(30) Priorität: 09.06.1999 DE 29910058 U; 09.06.1999 DE 29910056 U
(43) Veröffentlichungstag der Anmeldung: 28.01.2004
(62) Teilanmeldung aus: 00945629.4
(73) Patentinhaber: ThyssenKrupp Presta AG, 9492 Eschen (LI)
(72) Erfinder: Müller, Olaf, 65428 Rüsselsheim (DE)
(74) Vertreter: Lindner, Manfred Klaus

(56) Entgegenhaltungen:
- WO-A-98/22325
- WO-A-98/58831
- DE-A- 19 829 237
- NL-A- 7 502 142

## Beschreibung

Die Erfindung betrifft eine Lenksäule nach dem Oberbegriff des Anspruchs 1 sowie ein Verstellverfahren für eine Lenksäule nach dem Oberbegriff des Anspruchs 26.

Die auf den vorliegenden Anmelder/Inhaber zurückgehenden älteren deutschen Gebrauchsmusteranmeldungen 298 08 317.5, 299 01 657.9 und 299 00 289.6 sowie die darauf beruhende PCT-Anmeldung PCT/DE 99/01000 befassen sich allgemein mit einer Sicherheitslenksäule, einem Sicherheitssystem für ein Fahrzeug, einem Fahrzeug mit einem Sicherheitssystem sowie einem Sicherheitsverfahren, jeweils um Insassen bei einem Unfall zu schützen. Die vorliegende Erfindung betrifft Verbesserungen sämtlicher in der früheren Anmeldung behandelten Techniken und Ausführungsbeispiele insbesondere hinsichtlich der Auslösesteuerung der Lenksäule und speziell für verschiedene Insassen und Angurtzustände. Insofern ist der vollständige Offenbarungsgehalt dieser älteren Anmeldungen insbesondere hinsichtlich der Auslösesteuerung der Lenksäule und speziell für verschiedene Insassen und Angurtzustände hiermit durch die Bezugnahmen vollumfänglich in die vorliegenden Unterlagen aufgenommen.

Beispielsweise aus den genannten älteren Anmeldungen ist eine Fahrzeug-Lenksäule bekannt, die im Falle eines Unfalls so verstellt wird, dass jedenfalls das lenkradseitige Ende von einem Insassen weg bewegt wird.

Aus der gattungsgemäßen DE 198 29 237 A1 ist eine Lenkvorrichtung für ein Fahrzeug bekannt, wobei eine Lenksäule und/oder ein Lenkrad in einem Crashfall in Fahrzeugfrontrichtung verschoben wird. Diese Lenksäule ist über einen Kraftbegrenzer am Fahrzeugaufbau abgestützt. Die Kraft-Weg-Kennung des Kraftbegrenzers ist über ein Drosselventil beeinflußbar, das von einer Steuereinheit beaufschlagbar ist. Für die Beeinflussung der Kraft-Weg-Kennung des Kraftbegrenzers können unterschiedliche Parameter einzeln oder in Kombination berücksichtigt werden, wie z. B. Insassengewicht, Position eines Fahrzeugsitzes oder Rücklehnenneigung des Fahrzeugsitzes, soweit Insassenparameter betroffen sind.

Die WO 98/58831 A offenbart eine Lenksäule für ein Fahrzeug mit einer zweiteiligen Lenksäulenhalterung und einem Energiebabsorptionsmechanismus zwischen den beiden Teilen davon. Dieser Energiebabsorptionsmechanismus enthält zwei oder mehr Längsnute und ein Schneideglied, das ausgelegt ist, längs einer der Nute zu laufen, wenn eine relative Verstellung zwischen den beiden Teilen der Lenksäulenhalterung auftritt. Ferner sind Einrichtungen enthalten, um das Schneideglied auf eine vorgegebene Nut einzustellen, wobei wenigstens zwei Nute bezüglich einander unterschiedliche Deformationswiderstände haben, wodurch der Deformationswiderstand in dem Energiebabsorptionsmechanismus durch Einstellen des Schneidegliedes auf eine vorgegebene Nut eingestellt werden kann.

Ferner ist aus der WO 98/22325 A eine Lenksäule für ein Fahrzeug bekannt, wobei die Lenksäule im Fall eines Unfalls bezüglich einer Lastaufnahmestruktur verstellbar ist, und zwar unter Nutzung einer ersten Energieabsorptionseinheit zur Absorption von Energie während des Verstellens. Weiterhin ist ein Sensor zum Detektieren eines Zustandes vorgesehen, der repräsentativ dafür ist, dass ein Insasse einen Gurt angelegt hat. Ferner ist zwischen der Lenksäule und der Lastaufnahmestruktur eine zweite Energieabsorptionseinheit angeordnet und ist der Sensor an eine Blockiereinheit angeschlossen, die so ausgelegt ist, dass sie, wenn der obige Zustand detektiert wird, ein Verstellen der zweiten Energieabsorptionseinheit gegenüber der Lastaufnahmestruktur zuläßt, wodurch Energie absorbiert wird.

Die vorliegende Erfindung hat das Ziel, diese Lenksäule und ihr Verstellverfahren zum Schutz der Insassen weiter zu verbessern und insbesondere das Rückziehverhalten einer Lenksäule bei einem Unfall situationsabhängig und zuverlässig optimal zu gestalten.

Dieses Ziel wird mit einer Lenksäule nach dem Anspruch 1 und einem Verstellverfahren für eine Lenksäule nach dem Anspruch 26 erreicht.

Im Rahmen der Erfindung wird eine Lenksäule für ein Fahrzeug geschaffen, mit Verstelleinrichtungen, die im Falle eines Unfalls auslösbar sind, um zumindest einen Lenkrad-Endbereich der Lenksäule von einem Insassen weg zu bewegen, wobei die Verstelleinrichtungen Lastaufnahmeeinrichtungen zum Dämpfen einer Bewegung zumindest des Lenkrad-Endbereiches der Lenksäule von einem Insassen weg enthalten und für wenigstens zwei Betriebsmodi ausgelegt sind, und wobei eine Steuerung zum Erfassen von Insassenparametem mittels Detektionseinrichtungen und Auslösen eines Betriebsmodus der Verstelleinrichtungen in Abhängigkeit von den Insassenparametern vorgesehen ist, und wobei ferner die Lastaufnahmeeinrichtungen Deformationseinrichtungen enthalten, die mittels der Steuerung in Abhängigkeit von den Insassenparametern zur Realisierung eines bestimmten Betriebsmodus der Verstelleinrichtungen in oder ausser Wirkung bringbar sind, und die Deformationseinrichtungen wenigstens ein längs eines Bewegungsweges zur Lastaufnahme spanabhebendes Schneidmesser enthalten, das durch Kippen wahlweise in eine Lastaufnahmestellung bringbar ist.

Damit kann auf unterschiedliche Umstände, wie beispielsweise einen grossen nicht angegurteten Fahrer, einen grossen angegurteten Fahrer, einen kleinen angegurteten Fahrer, etc. Rücksicht genommen und im Falle eines Unfalls eine jeweils optimale Lenksäulenverstellung durchgeführt werden.

Eine vorteilhafte und bevorzugte Weiterbildung besteht darin, dass jedes Schneidmesser auf einem Kipppunkt gelagert ist, so dass es bei Antrieb der Verstelleinrichtungen gezielt einschneidet. Dies kann dadurch weitergebildet sein, dass jedes Schneidmesser in einem Schlitz eines Innenrohr-Ringkolbens der Lenksäule derart auf einem Kipppunkt gelagert ist, dass es bei Antrieb der Verstelleinrichtungen über den Innenrohr-Ringkolben gezielt in eine Wandung eines Lenksäulenaussenrohrs der Lenksäule einschneidet.

Bei einer anderen bevorzugten Weiterbildung ist vorgesehen, dass jedem Schneidmesser ein Anschlag zugeordnet ist, durch den die Schneidtiefe des Spanes bestimmt ist. alternativ oder zusätzlich kann vorgesehen sein, dass für das wenigstens eine Schneidmesser ein druckbeaufschlagter Steuerstift vorgesehen ist, durch den das Kippen des Schneidemessers in die Lastaufnahmestellung verhinderbar ist. Statt der letzten Ausgestaltungsvariante ist es auch von Vorteil, wenn für das wenigstens eine Schneidmesser ein druckbeaufschlagter Steuerstift vorgesehen ist, der ausgelegt ist, das Schneidmesser außer Funktion zu kippen, um die Lastaufnahme zu überspielen.

Vorzugsweise ist bei einer erfindungsgemäßen Lenksäule ferner vorgesehen, dass die Verstelleinrichtungen Antriebseinrichtungen zum Bewirken der Bewegung zumindest des Lenkrad-Endbereiches der Lenksäule von einem Insassen weg enthalten, und dass die Antriebseinrichtungen im Falle eines Unfalls von der Steuerung in Abhängigkeit von den Insassenparametern auslösbar sind. Eine bevorzugte Weiterbildung davon besteht darin, dass die Antriebseinrichtungen einen pyrotechnischen Gasgenerator enthalten und/oder elektrisch auslösbar sind.

Gemäß einer anderen mit Vorteil einzusetzenden Fortbildung der vorliegenden Erfindung ist bei der Lenksäule vorgesehen, dass die Verstelleinrichtungen Lastaufnahmeeinrichtungen zum Dämpfen einer Bewegung zumindest des Lenkrad-Endbereiches der Lenksäule von einem Insassen weg enthalten, und dass die Lastaufnahmeeinrichtungen im Falle eines Unfalls von der Steuerung in Abhängigkeit von den Insassenparametern direkt oder indirekt betreibbar sind. Dies läßt sich vorzugsweise dadurch weiterbilden, dass die Lastaufnahmeeinrichtungen wenigstens zwei Stufen enthalten, die im Falle eines Unfalls von der Steuerung in Abhängigkeit von den Insassenparametern direkt oder indirekt betreibbar sind, wobei vorzugsweise die Stufen der Lastaufnahmeeinrichtungen einzeln mit insbesondere jeweils unterschiedlichen Lastaufnahmeeigenschaften und/oder gleichzeitig mit addierten Lastaufnahmeeigenschaften betreibbar sind. Alternativ oder zusätzlich kann vorgesehen sein, dass die Lastaufnahmeeinrichtungen oder ggf. jede Stufe davon einzeln im Falle eines Unfalls von der Steuerung in Abhängigkeit von den Insassenparametern direkt oder indirekt abschaltbar sind. Weitere mit diesen Ausführungen kombinierbare Merkmale bestehen darin, dass die Lastaufnahmeeinrichtungen oder ggf. eine Stufe davon Deformationseinrichtungen, insbesondere mit längs eines Bewegungsweges spanabhebenden Schneidmessern, und/oder Bremseinrichtungen, insbesondere einen Bremsschlitten mit vorzugsweise wenigstens zwei Bremskraftstufen, enthalten.

Mit Vorzug ist die Steuerung zum Erfassen der Sitzposition, des Angurtzustandes, der Grösse, des Gewichts und/oder der Körperhaltung des Insassen mittels der Detektionseinrichtungen ausgelegt.

Bei der vorstehenden Ausführung kann die Steuerung vorzugsweise zum Auslösen der Antriebseinrichtungen in Abhängigkeit von der Sitzposition des Insassen und insbesondere zum Erfassen eines vorgebbaren Abstandes oder einer Unterschreitung eines vorgebbaren Abstandes der Position des Sitzes für den Insassen vom Lenkrad mittels der Detektionseinrichtungen ausgelegt sein. Bei letzterer Ausgestaltung ist es ferner bevorzugt, wenn die Steuerung zum Auslösen eines solchen Betriebsmodus der Verstelleinrichtungen ausgelegt ist, bei dem im Falle eines Unfalls bei einem erfaßten vorgebbaren Abstand oder einer erfaßten Unterschreitung eines vorgebbaren Abstandes der Position des Sitzes für den Insassen vom Lenkrad die Antriebseinrichtungen der Verstelleinrichtungen ausgelöst werden. Eine vorteilhafte Weiterbildung davon besteht darin, dass die Steuerung zum Betreiben der Lastaufuahmeeinrichtungen oder ggf. jeder Stufe davon einzeln in Abhängigkeit vom Angurtzustand und/oder der Sitzposition des Insassen ausgelegt ist, wobei die Steuerung insbesondere zum Auslösen eines solchen Betriebsmodus der Verstelleinrichtungen ausgelegt ist, bei dem im Falle eines Unfalls bei einem nicht angegurteten Insassen die Lastaufnahmeeinrichtungen oder zumindest eine Stufe davon wirksam sind/ist. Alternativ oder zusätzlich kann die Steuerung zum Auslösen eines solchen Betriebsmodus der Verstelleinrichtungen ausgelegt sein, bei dem im Falle eines Unfalls bei einem erfaßten vorgebbaren Abstand oder einer erfaßten Unterschreitung eines vorgebbaren Abstandes der Position des Sitzes für den Insassen vom Lenkrad die Lastaufnahmeeinrichtungen oder zumindest eine Stufe davon unwirksam sind/ist.

Es ist ferner bevorzugt, dass die Detektionseinrichtungen Positionserkennungseinrichtungen des Sitzes für den Insassen, Zustandserkennungseinrichtungen des Gurtschlosses für den Anschnallgurt des Insassen, Grössen-, Gewichts- und/oder Körperhaltungserkennungseinrichtungen bezüglich des Insassen enthalten. Dabei können die Positionserkennungseinrichtungen des Sitzes für den Insassen insbesondere wenigstens einen elektrischen oder optischen Schalter in oder im Zusammenhang mit Sitzführungsschienen enthalten, und/oder die Zustandserkennungseinrichtungen des Gurtschlosses für den Anschnallgurt des Insassen wenigstens einen elektrischen oder optischen Schloßnutzungsschalter enthalten.

Das weiter oben angegebene Ziel der vorliegenden Erfindung wird auch mit einem Verstellverfahren für eine Lenksäule eines Fahrzeuges erreicht,
wobei im Falle eines Unfalls zumindest ein Lenkrad-Endbereich der Lenksäule mittels Verstelleinrichtungen von einem Insassen weg bewegt wird,
wobei mittels Detektionseinrichtungen Insassenparameter erfaßt werden, und
wobei die Bewegung zumindest des Lenkrad-Endbereiches der Lenksäule vom Insassen weg mittels einer Steuerung in Abhängigkeit von den Insassenparametern gemäß einem Betriebsmodus von mehreren Betriebsmodi der Verstelleinrichtungen erfolgt, und wobei ferner
zur Realisierung eines bestimmten Betriebsmodus der Verstelleinrichtungen mittels der Steuerung in Abhängigkeit von den Insassenparametern Deformationseinrichtungen zur bewegungsdämpfenden Lastaufnahme in oder ausser Wirkung gebracht werden, und,
wenn die Deformationseinrichtungen wirksam sind, im Falle eines Unfalls wenigstens spanabhebendes Schneidmesser der Deformationseinrichtungen zur bewegungsdämpfenden Lastaufnahme längs eines Bewegungsweges durch Kippen in eine Lastaufnahmestellung verstellt wird.

Dieses Verfahren kann mit Vorteil dadurch weitergebildet sein, dass jedes Schneidmesser auf einem Kipppunkt gelagert ist, so dass es bei Antrieb der Verstelleinrichtungen gezielt einschneidet. In Weiterbildung davon ist es ferner bevorzugt, wenn jedes Schneidmesser in einem Schlitz eines Innenrohr-Ringkolbens der Lenksäule derart auf einem Kipppunkt gelagert ist, dass es bei Antrieb der Verstelleinrichtungen über den Innenrohr-Ringkolben gezielt in eine Wandung eines Lenksäulenaussenrohrs der Lenksäule einschneidet.

Eine andere Weiterbildung besteht darin, dass die Schneidtiefe des Spanes jedes Schneidmessers durch einen Anschlag bestimmt ist.

Ferner ist es bevorzugt, wenn das Kippen des Schneidemessers in die Lastaufhahmestellung durch einen druckbeaufschlagten Steuerstift verhindert wird. Alternativ kann mit Vorzug vorgesehen sein, dass das wenigstens eine Schneidmesser durch einen druckbeaufschlagten Steuerstift außer Funktion gekippt wird, um die Lastaufnahme zu überspielen.

Vorzugsweise kann dabei ferner ein Antrieb der Verstelleinrichtungen zum Bewirken der Bewegung zumindest des Lenkrad-Endbereiches der Lenksäule vom Insassen weg im Falle eines Unfalls in Abhängigkeit von den Insassenparametern ausgelöst und/oder eine Bewegung zumindest des Lenkrad-Endbereiches der Lenksäule von einem Insassen weg im Falle eines Unfalls in Abhängigkeit von den Insassenparametern gedämpft werden. Gemäß einer bevorzugten Weiterbildung der letztgenannten Verfahrensvariante wird eine Dämpfung der Bewegung zumindest des Lenkrad-Endbereiches der Lenksäule von einem Insassen weg im Falle eines Unfalls in Abhängigkeit von den Insassenparametern insbesondere wahlweise in einzelnen Stufen abgeschaltet.

Bei dem erfindungsgemäßen Verfahren ist es mit Vorteil auch möglich, dass die Sitzposition, der Angurtzustand, die Grösse, das Gewicht und/oder die Körperhaltung des Insassen als Insassenparameter erfaßt werden/wird. Dabei ist es bevorzugt, dass die Verstelleinrichtungen in Abhängigkeit von der Sitzposition des Insassen angetrieben werden, wobei insbesondere die Verstelleinrichtungen im Falle eines Unfalls bei einem erfaßten vorgebbaren Abstand oder einer erfaßten Unterschreitung eines vorgebbaren Abstandes der Position des Sitzes für den Insassen vom Lenkrad gemäß einem Betriebsmodus nicht angetrieben werden. Alternativ oder zusätzlich können die Verstelleinrichtungen in Abhängigkeit vom Angurtzustand und/oder von der Sitzposition des Insassen gedämpft werden. Bei der letzteren Vorgehensweise können ferner die Verstelleinrichtungen im Falle eines Unfalls bei einem nicht angegurteten Insassen gemäß einem Betriebsmodus ganz oder teilweise gedämpft werden und/oder können die Verstelleinrichtungen im Falle eines Unfalls bei einem erfaßten vorgebbaren Abstand oder einer erfaßten Unterschreitung eines vorgebbaren Abstandes der Position des Sitzes für den Insassen vom Lenkrad gemäß einem Betriebsmodus ganz oder teilweise gedämpft werden.

Weitere bevorzugte und vorteilhafte Ausgestaltungen ergeben sich aus Kombinationen der abhängigen Ansprüche sowie aus dem gesamten Offenbarungsgehalt der vorliegenden Unterlagen.

Mit der vorliegenden Erfindung werden somit eine Lenksäule sowie ein Verstellverfahren für eine Lenksäule gemäß eingangs angegebenen älteren Anmeldungen in vorteilhafter Weise weiter verbessert.

Anhand der nachfolgend beschriebenen und in den Zeichnungen dargestellten Ausführungs- und Anwendungsbeispiele wird die Erfindung näher erläutert.
- Fig. 1: zeigt schematisch Betriebsmodi von Verstelleinrichtungen eines ersten Ausführungsbeispiels einer Lenksäule,
- Fig. 2: zeigen schematisch ein Schalt- und Aufbauschema der Steuerung des ersten Ausführungsbeispiels der Lenksäule von Fig. 1,
- Fig. 3a, 3b und 3c: zeigen schematisch die Verstelleinrichtungen des ersten Ausführungsbeispiels der Lenksäule von Fig. 1 in einer Ansicht von unten (linke Hälfte von Fig. 3a) und oben (rechte Hälfte von Fig. 3a) bzw. entsprechende Querschnitte,
- Fig. 4: zeigen schematisch die Antriebseinrichtungen des ersten Ausführungbeispiels der Lenksäule von Fig. 1,
- Fig. 5: zeigen schematisch die Lastaufnahmeeinrichtungen des ersten Ausführungsbeispiels der Lenksäule von Fig. 1, und
- Fig. 6 bis 8: zeigen schematisch in einer Querschnittsansicht ein zweites Ausführungsbeispiel einer Lenksäule vor einer Auslösung, nach einer Auslösung bei einem kleinen Insassen bzw. nach einer Auslösung bei einem grossen.

Gleiche Bezugszeichen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

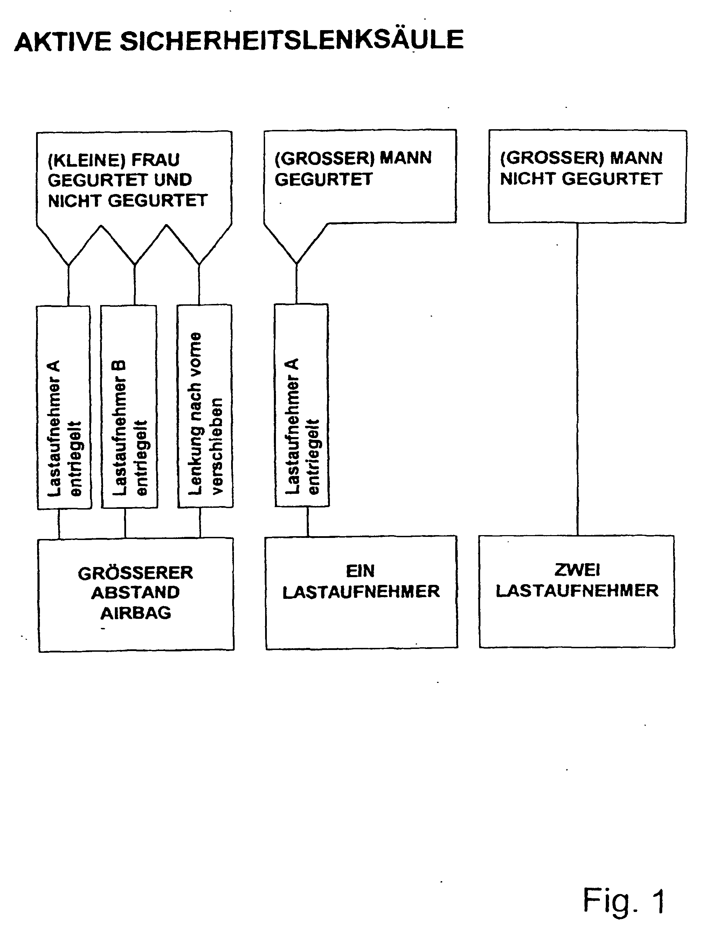

Unter Bezugnahme auf die Fig. 1, 2, 3a, 3b, 3c, 4 und 5, denen weitere Einzelheiten und Angaben zu entnehmen sind, werden nachfolgend weitere Merkmale, Funktionen und Vorteile der vorliegenden Erfindung anhand eines ersten Ausführungsbeispiels lediglich exemplarisch näher erläutert.

Dieses Ausführungsbeispiel betrifft eine aktive Sicherheitslenksäule für die drei wichtigsten Beanspruchungen im Falle eines Unfalls, wie es durch das Schema der Fig. 1 verdeutlicht wird, die den Aufbau und die Betriebsmodi für die entsprechende Lenksäule zeigt. Bei diesem ersten Ausführungsbeispiel sind entsprechend drei Anforderungen bei einem Unfall drei auf die jeweiligen Insassenparameter abgestimmte Betriebsmodi vorgesehen:
1. Mehr Airbagabstand bei kleinen Personen, indem einerseits das Lenkradende der Lenksäule infolge eines Front-Unfalls aktiv beispielsweise durch einen pyrotechnisch angetriebenen Zylinder vom Insassen wegbewegt wird, verhindert die Verletzungsgefahr solcher kleinen Personen durch den Airbag selbst, da sie sich sonst jedenfalls durch die unfallbedingte abrupte trägheitsbedingte Vorwärtsbewegung zu dem Lenkrad hin zu nahe an dem sich mit Wucht aufblasenden Airbag aufhalten würden, und andererseits Lastaufnehmer, die für Betriebsmodi für grosse Personen vorgesehen sind (siehe nachfolgend die Punkte 2. und 3.), ausser Funktion gesetzt werden;
2. Lastspitzenabbau bei großen angeschnallten Personen, indem infolge eines Front-Unfalls das Lenkradende der Lenksäule nicht aktiv vom Insassen wegbewegt wird (ein z.B. für eine aktive Rückziehung des Lenkradendes der Lenksäule vorgesehener pyrotechnisch angetriebener Zylinder wird nicht ausgelöst) und gleichzeitig dafür gesorgt wird, dass ein für diesen Anwendungsfall vorbestimmter Lastaufnehmer A zum Einsatz kommt, der beim Auftreffen des Insassen auf das Lenkrad dadurch für eine entsprechende Energieabsorption sorgt, dass eine Bewegung zumindest des Lenkradendes der Lenksäule bedingt durch das Auftreffen des Insassen mit dem Lastaufnehmer abgebremst wird; und
3. großer Lastspitzenabbau bei großen unangeschnallten Personen, indem infolge eines Front-Unfalls das Lenkradende der Lenksäule nicht aktiv vom Insassen wegbewegt wird (ein z.B. für eine aktive Rückziehung des Lenkradendes der Lenksäule vorgesehener pyrotechnisch angetriebener Zylinder wird nicht ausgelöst) und gleichzeitig dafür gesorgt wird, dass zwei für diesen Anwendungsfall vorbestimmte Lastaufnehmer A und B simultan und additiv zum Einsatz kommen, die beim Auftreffen des Insassen auf das Lenkrad dadurch für eine entsprechende Energieabsorption sorgen, dass eine Bewegung zumindest des Lenkradendes der Lenksäule bedingt durch das Auftreffen des Insassen mit den Lastaufnehmern A und B abgebremst wird.

Bei dem ersten Ausführungsbeispiel ist somit eine zweifache parallel geschaltete Lastbegrenzung vorgesehen, die in Kombination bei nicht angeschnallten großen Personen die hohe Last abbaut. Bei nicht angeschnallten schweren Fahrern ist eine wesentlich größere Lastaufnahme notwendig, als es heutzutage in der Praxis üblich ist. Heutige aus der Praxis bekannte Sicherheitslenksäulen sind beispielsweise in einem "Schlitten" (siehe Fig. 1, 2, 3a, 3b, 3c und 4 sowie zugehörige Beschreibung) gelagert. Dieser "Schlitten" bewegt sich bei Überschreitung einer konstruktiv festgelegten Lastgrenze gegen ein sich verformendes Blech, wodurch gemäß der vorliegenden Erfindung die hohe Lastspitze bei schweren Fahrern mit beiden Lastaufnehmem A und B abgebaut wird.

Bei angeschnallten großen Fahrern (erkennbar z.B. durch einen Schalter im Gurtschloß) wird bei einem Crash oder Unfall eine der beiden Lastbegrenzungen (z.B. der Lastaufnehmer A) außer Funktion gesetzt. Dies geschieht beispielsweise durch Entriegelung der Befestigung einer der Lastbegrenzungen durch einen Elektromagneten, einen pyrotechnisch entriegelbaren Bolzen o.ä.

Bei kleinen Fahrern (erkennbar z.B. durch einen Schalter in der Sitzschiene zur Lageabfrage) werden beide Lastaufnehmer A und B entriegelt und der Schlitten pyrotechnisch verfahren, um den nötigen Abstand zum explodierenden Airbag zu bekommen. Damit wird ein besonderer Vorteil der vorliegenden Erfindung erreicht.

Die Gewichtserkennung des großen Fahrers und die Positionserkennung z.B. einer kleinen Fahrerin können natürlich auch mittels elektronischer Gewichts- und Lagesensoren, die momentan vielerorts entwickelt werden, oder auf andere geeignete, dem Fachmann ohne weiteres bekannte oder zugängliche Arten ermittelt werden.

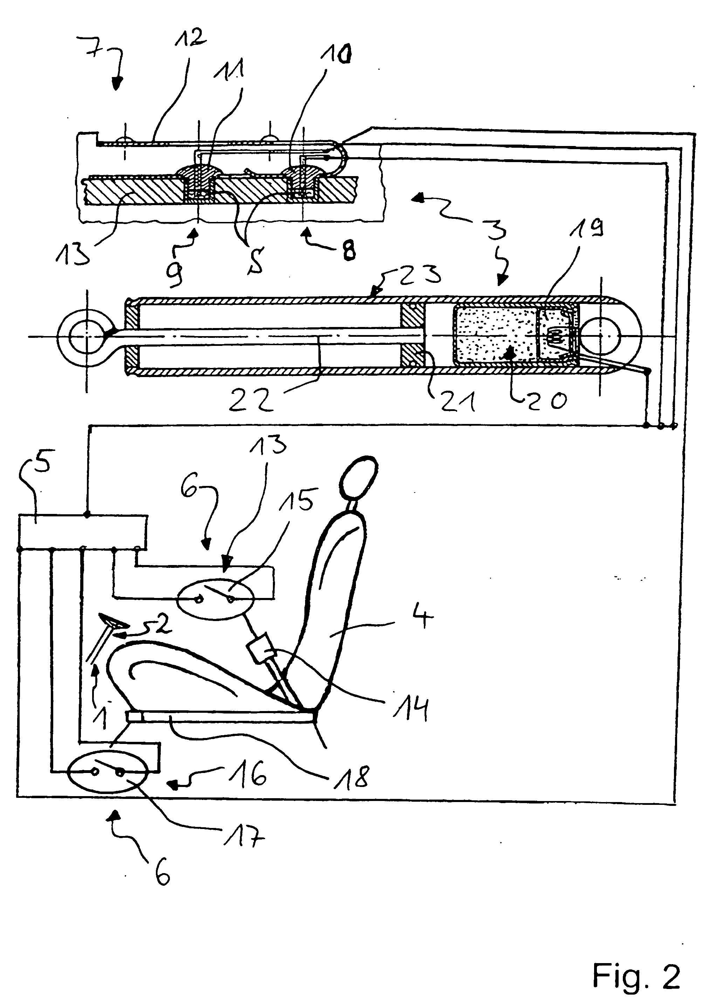

Die Fig. 2 verdeutlicht schematisch das Schaltschema des ersten Ausführungsbeispiels.

Eine nur angedeutet dargestellte Lenksäule 1 für ein Fahrzeug (nicht gezeigt) hat einen üblichen teleskopischen Aufbau, auf den wegen seiner Bekanntheit in zahlreichen Ausführungsformen hier nicht weiter eingegangen wird, da sich die vorliegende Erfindung bei allen bekannten Ausgestaltungen auch insgesamt rückziehbarer, nicht teleskopisch zusammenschiebbarer Lenksäulen anwenden läßt und die vorliegende Erfindung nicht die eigentliche Bauart solcher Lenksäulen betrifft. Die Lenksäule 1 hat einen Lenkrad-Endbereich 2 und ist mit Verstelleinrichtungen 3 versehen, die im Falle eines Unfalls auslösbar sind, um zumindest den Lenkrad-Endbereich 2 der Lenksäule 1 von einem Insassen (nicht gezeigt) weg zu bewegen, der auf einem Sitz 4 sitzt. Die Verstelleinrichtungen 3 sind für die drei in der Fig. verdeutlichten Betriebsmodi ausgelegt. Eine Steuerung 5 erfaßt mittels Detektionseinrichtungen 6 Insassenparameter und löst in Abhängigkeit von den Insassenparametern einen Betriebsmodus der Verstelleinrichtungen 3 aus.

Die Verstelleinrichtungen 3 enthalten Lastaufnahmeeinrichtungen 7 mit einem ersten und einem zweiten Lastaufhehmer oder -begrenzer 8 (A) bzw. 9 (B), die jeweils einen eigenen Bolzen 10 bzw. 11 und ein gemeinsames Lastaufnahmeblech 12 enthalten, die Deformationseinrichtungen (D) bilden. Durch die Bolzen 10 und 11 ist das Lastaufnahmeblech 12 mit einem Schlitten 13 verbunden. Das Lastaufnahmeblech 12 ist mit einem Teleskopteil (nicht gezeigt) der Lenksäule 1 fest verbunden, und der Schlitten 13 ist mit dem anderen Teleskopteil (nicht gezeigt) der Lenksäule 1 fest verbunden. Wird das Teleskopteil (nicht gezeigt) der Lenksäule 1, das den Lenkrad-Endbereich 2 enthält, durch einen auf das Lenkrad (nicht bezeichnet) auftreffenden Insassen (nicht dargestellt) belastet, so wird es in oder über das andere Teleskopteil geschoben. Diese Bewegung wird durch die Lastaufnahmeeinrichtungen 7 gedämpft, da das Lastaufnahmeblech 12 selbst und/oder gegen die Bolzen 10 und 11 verformt werden muß.

Die Bolzen 10 und 11 verfügen jeweils über eine Sprengladung S, die von der Steuerung 5, die beispielsweise verbunden ist mit oder integriert ist in einer Gesamtsteuerung (nicht gezeigt) für einen Airbag, jeweils unabhängig voneinander elektrisch gezündet werden können, um jeden der Bolzen 10 und 11 entsprechend unwirksam zu machen. An die Steuerung 5 sind als Detektionseinrichtungen 6 Zustandserkennungseinrichtungen 13 eines Gurtschlosses 14 in Form eines Gurt- oder Schloßnutzungsschalters 15 angeschlossen. Dieser Gurtnutzungsschalter 15 führt zu einem Gurtnutzungssignal, wenn der Insasse seinen Sicherheitsgurt (nicht gezeigt) vorschriftsmäßig angelegt hat. Wird das Gurtnutzungssignal nicht erzeugt, so ist die Steuerung darüber informiert, dass der Insasse nicht ordnungsgemäß angeschnallt ist.

Weiterhin sind in den Detektionseinrichtungen 6 Positionserkennungseinrichtungen 16 enthalten, die durch einen Positionsschalter 17 in einer Sitzschiene 18 des Sitzes 4 gebildet sind. Dieser Positionsschalter 17 führt zu einem Nahpositionssignal, wenn der Sitz 4 die Position des Positionsschalters 17 erreicht hat oder näher als der Positionsschalter 17 an der Lenksäule 1 ist. Dadurch erhält die Steuerung 5 die Information, dass es sich bei dem Insassen um eine kleine Person handelt. Wird das Nahpositionssignal nicht erzeugt, so ist die Steuerung darüber informiert, dass es sich bei dem Insassen um eine grosse Person handelt.

Durch die möglichen Kombinationen von Gurtnutzungssignal und Nahpositionssignal kann die Steuerung 5 jeden der drei Betriebsmodi der Verstelleinrichtungen 3 gemäß der Fig. 1 einstellen.

Hat die Steuerung 5 das Nahpositionssignal erhalten, so veranlaßt sie den Betriebsmodus für eine angeschnallte oder nicht angeschnallte "kleine Frau". In diesem Modus zündet die Steuerung 5 die Sprengladungen S der beiden Bolzen 10 und 11, so dass diese wirkungslos werden und das Lastaufnahmeblech 12 und der Schlitten 13 entkoppelt sind. Ferner zündet die Steuerung 5 einen pyrotechnischen Sprengsatz 19 eines Gasgenerators 20, und das von diesem erzeugte Gas beaufschlagt einen Kolben 21 mit einer Kolbenstange 22, die an das den Lenkrad-Endbereich 2 enthaltende Teleskopteil (nicht dargestellt) der Lenksäule 1 fest so angebunden ist, dass die beiden Teleskopteile (nicht dargestellt) der Lenksäule 5 zusammengezogen werden. Die Teile 19 bis 22 sind Bestandteile der Verstelleinrichtungen 3 und bilden zusammen Antriebseinrichtungen 23. Durch das Zusammenziehen oder Zurückziehen der Lenksäule 1 wird für die "kleine Frau", die relativ nahe am Lenkrad (nicht bezeichnet) sitzt, mehr Freiraum geschaffen, so dass sie von einem sich bei einem Unfall aufblasenden Airbag (nicht dargestellt) nicht oder zumindest nicht fest getroffen wird.

Hat die Steuerung 5 das Nahpositionssignal nicht erhalten, überprüft sie, ob das Gurtnutzungssignal gegeben ist. Liegt das Gurtnutzungssignal vor, so veranlaßt die Steuerung 5 den Betriebsmodus für einen angeschnallten "grossen Mann". In diesem Modus zündet die Steuerung 5 die Sprengladung S nur des Bolzens 11, so dass nur dieser wirkungslos wird und das Lastaufnahmeblech 12 und der Schlitten 13 noch durch den Bolzen 10 gekoppelt sind. Der Lastaufhehmer 8 (A) ist damit wirksam, um Energie abzubauen, die beim Aufprall des angeschnallten "grossen Mannes" auf das Lenkrad (nicht bezeichnet) auftritt. Die Antriebseinrichtungen 23 werden nicht ausgelöst.

Erhält die Steuerung 5 weder das Nahpositionssignal noch das Gurtnutzungssignal erhalten, so veranlaßt die Steuerung 5 den Betriebsmodus für einen unangeschnallten "grossen Mann". In diesem Modus zündet die Steuerung 5 keine Sprengladung S, so dass das Lastaufnahmeblech 12 und der Schlitten 13 durch beide Bolzen 10 und 11 gekoppelt sind. Der Lastaufnehmer 8 (A) und der Lastaufnehmer 9 (B) sind damit wirksam, um Energie abzubauen, die beim Aufprall des unangeschnallten "grossen Mannes" auf das Lenkrad (nicht bezeichnet) auftritt. Die Antriebseinrichtungen 23 werden nicht ausgelöst.

Signalleitungen zwischen der Steuerung 5 und den Sprengladungen S, dem pyrotechnischen Sprengsatz 19 sowie den Detektionseinrichtungen 6 sind als Linien oder Striche in der Fig. 2 eingezeichnet.

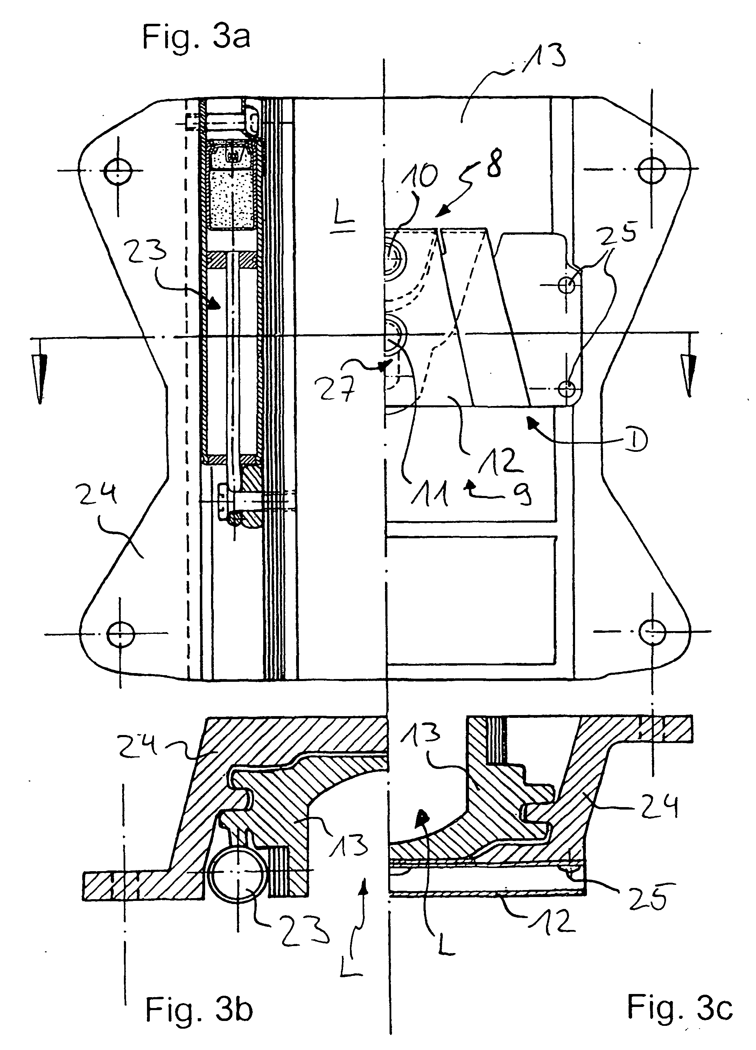

Die Fig. 3a, 3b und 3c zeigen einen Schlitten 13 zur Aufnahme der Lenkung (nicht gezeigt) in seiner Schlittenaufnahme 24 in der Fig. 3a links von unten und rechts von oben und in den Fig. 3b und 3c jeweils geschnitten. Der pyrotechnische Gasgenerator 20 der Antriebseinrichtungen 23 ist einerseits an der Schlittenaufnahme 24 und andererseits am Schlitten 13 befesti gt.

Auf der rechten Seite der Fig. 3a sind der Lastaufnehmer 8 (A) und der Lastaufnehmer 9 (B) einstückig in Einbaulage gezeigt. Die Lastaufnehmer 8 und 9 sind einerseits mit den Bolzen 10 bzw. 11 am Schlitten 13 und andererseits an der Schlittenaufnahme 24 mit Verschraubungen 25 versehen. Der verschiebbare Teleskopteil (nicht gezeigt) der Lenksäule 1 wird in der Ausnehmung L fest montiert.

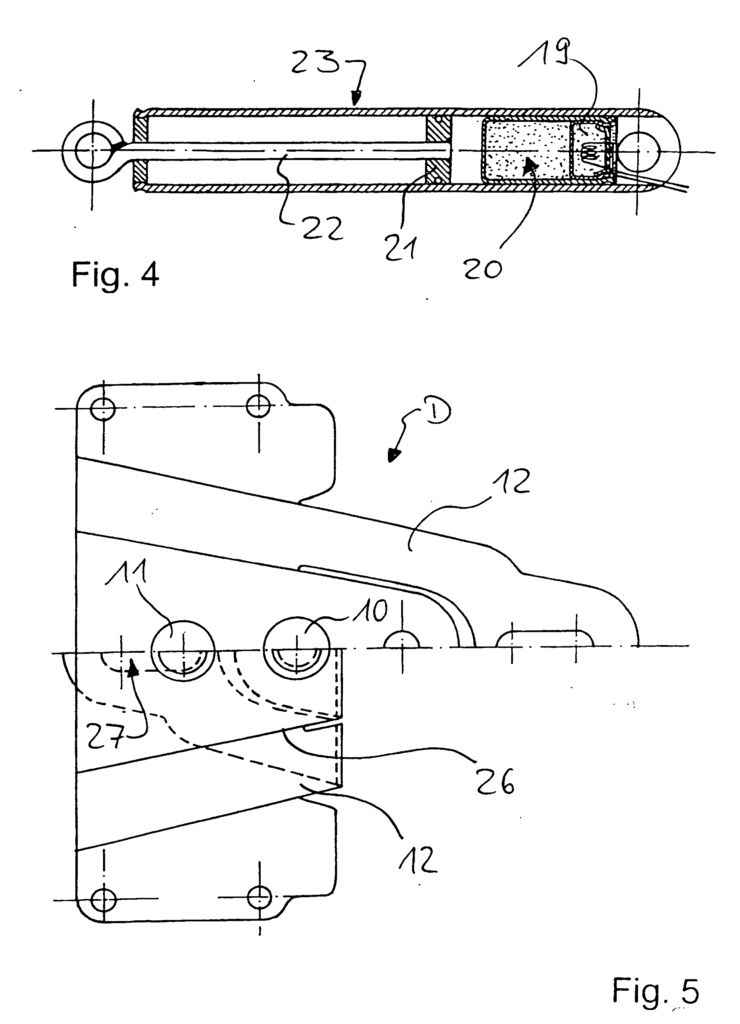

Die Antriebseinrichtungen 23 sind in der Fig. 4 gesondert dargestellt, wie sie bereits im Zusammenhang mit der Fig. 2 erläutert wurden.

Die Fig. 5 zeigt oben vor, d.h. in einem einbaufertigen Zustand, und unten nach einer Betätigung beider Lastaufnehmer 8 und 9 das Lastaufnahmeblech 12, bei dem es sich um ein Stanzteil handelt.

Als weitere erfinderische Besonderheit ist der Lastbegrenzer 8 (A) derart gestaltet, daß er mittels des Bolzens 10 sofort bei einer Lastüberschreitung an Reißlinien 26 einreißt. Dabei schiebt sich das Ende des Lastbegrenzers 8 (A) zwangsläufig über den Lastbegrenzer 9 (B), dessen Bolzen 11 sich vorerst in einem Schlitz 27 des Lastbegrenzers 9 (B) bewegt. Diese Auslegung führt in vorteilhafter Weise dazu, daß sich die Ausreißkräfte der beiden Lastaufnehmer 8 (A) und 9 (B) addieren. Würden sie parallel nebeneinander einreißen, würde nur einer der beiden Lastaufnehmer A oder B arbeiten.

Durch die Erfindung wird somit gemäß des ersten Ausführungsbeispiels insbesondere eine Sicherheitslenksäule mit einem Crashschlitten geschaffen, der zwei Lastaufnehmer hat, für angeschnallte und nicht angeschnallte große und kleine Personen. Gemäß einer bevorzugten Weiterbildung dieser Ausführung erfolgt eine Steuerung mit einem Schloßnutzungsschalter. In weiterer Fortbildung der Erfindung wird der Crashschlitten für die kleine Personen als "Abstandsschlitten" genutzt und werden seine Lastaufnehmer außer Betrieb gesetzt. Eine Feststellung kleiner Personen kann bevorzugt über eine elektrische Sitzlageerkennung erfolgen.

Besonders bevorzugt ist es gemäß der vorliegenden Erfindung, wenn die Lastaufhehmer derart hintereinander laufend gebaut sind, z.B. mittels eines Schlitzes in einer Anbindung, zum verzögerten Anlauf, daß sich die Lastaufnahmen bei der Last addieren.

Lediglich der Vollständigkeit halber wird noch darauf hingewiesen, dass die beiden Teleskopteile, wie z.B. ineinander gesteckte Rohre, der Lenksäule 1 im Normalbetrieb zwar einerseits fixiert sind, so dass sie nicht ohne weiteres zusammengeschoben werden können, dass aber diese Fixierung andererseits so schwach ist (z.B. Kunststoffbolzen), dass dadurch erstens keine merkliche Lastaufnahme für einen grossen (unangeschnallten) Fahrer erreicht werden kann, und zweitens der Rückzug der Lenksäule durch die Antriebseinrichtungen bei einem kleinen (angeschnallten) Fahrer nicht spürbar behindert wird. Dies gilt für das bereits erläuterte Ausführungsbeispiel ebenso, wie für das nachfolgend erläuterte zweite Ausführungsbeispiel.

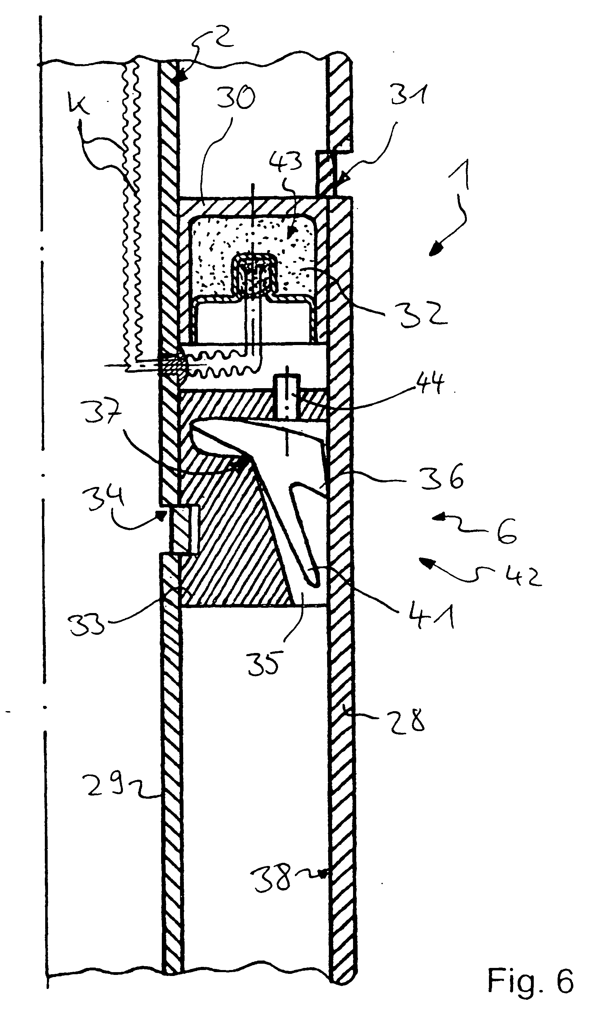

Unter Bezugnahme auf die Fig. 6 bis 8, denen weitere Einzelheiten und Angaben zu entnehmen sind, werden nachfolgend weitere Merkmale, Funktionen und Vorteile der vorliegenden Erfindung anhand eines zweitens Ausführungsbeispiels lediglich exemplarisch näher erläutert. Insbesondere betrifft dieses Ausführungsbeispiel eine Sicherheitslenksäule mit pyrotechnisch angetriebener Verkürzung bei kleinen Fahrern und Lastspitzenabbau bei großen Fahrern. Heutige Lenksäulen sind zum Teil als Ergänzung zu einem Airbag bereits mit einem Lastspitzenabbau für schwere Personen ausgerüstet. Die Praxis hat ferner gezeigt, daß kleine und zu dicht am Airbag positionierte Fahrer teilweise durch diesen zu Tode kommen. Das zweite Ausfiihrungsbeispiel schafft ebenfalls eine Lösung zum Lastspitzenabbau bei großen Fahrern und im gleichen System eine Lenksäulenverkürzung bei kleinen Fahrern bei einem Unfall.

Die Fig. 6 bis 8 zeigen ein Lenksäulenaussenrohr 28 und ein Lenksäuleninnenrohr 29, die die Teleskopteile einer Lenksäule 1 darstellen, wobei das Lenksäuleninnenrohr 29 den Lenkrad-Endbereich 2 der Lenksäule 1 enthält. An dem Lenksäulenaussenrohr 28 ist ein Aussenrohr-Ringkolben 30 beispielsweise durch eine Verclinchverbindung 31 befestigt. Der Aussenrohr-Ringkolben 30 enthält eine pyrotechnische Patrone 32, die mit Steuerkabeln K mit der Steuerung 5 (vergleiche Fig. 2) verbunden ist. Mit dem Lenksäuleninnenrohr 29 ist ein Innenrohr-Ringkolben 33 fest durch ebenfalls eine Verclinchverbindung 34 verbunden. Dieser Innenrohr-Ringkolben 33 enthält beim zweiten Ausführungsbeispiel ein oder mehrere in Schlitzen 35 gelagerte, entsprechend geformte Schneidemesser 36 als Teile von Deformationseinrichtungen (D). Die Schneidemesser 36 sind derart auf einem "Kipppunkt" 37 gelagert, daß sie bei Antrieb über den Innenrohr-Ringkolben 33 gezielt in die Wandung 38 des Lenksäulenaussenrohrs 28 der Lenksäule 1 einschneiden. Die Schneidtiefe 39 des Spanes 40 wird durch einen entsprechend geformten Anschlag 41 bestimmt. Die Größe des Spanes 40 ist proportional der gewünschten Lastaufnahme. Die Deformationseinrichtungen (D) bilden Lastaufnahmen 42.

Der Aussenrohr-Ringkolben 30 und der Innenrohr-Ringkolben 33 bilden Antriebseinrichtungen 23, die ebenso wie die Lastaufnahmen 42 Bestandteile der Verstelleinrichtungen 3 der Lenksäule 1 sind.

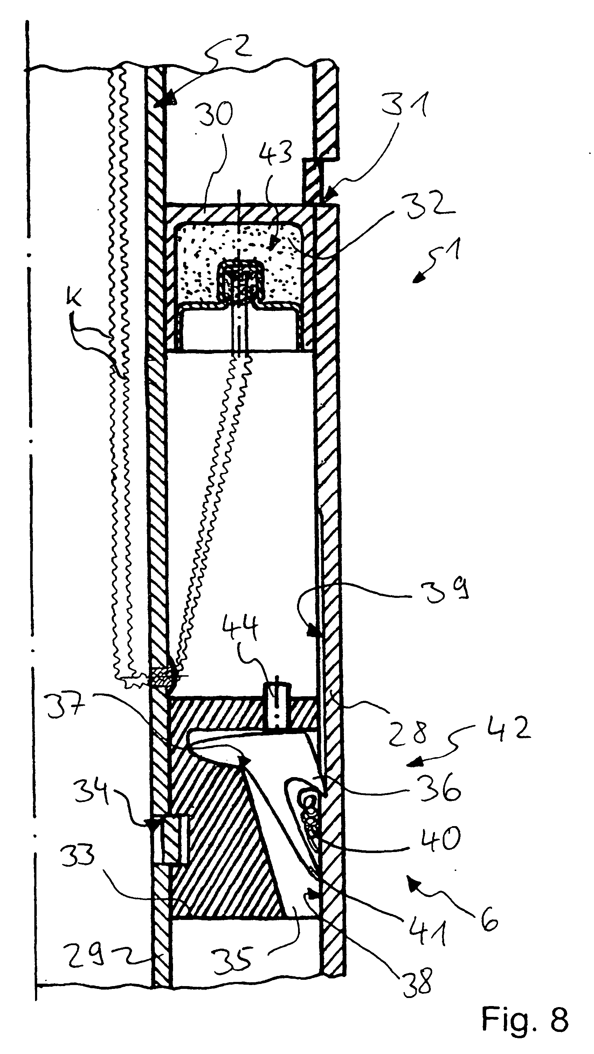

Die Fig. 8 zeigt eine entsprechende Lastaufnahme 42 in Funktion.

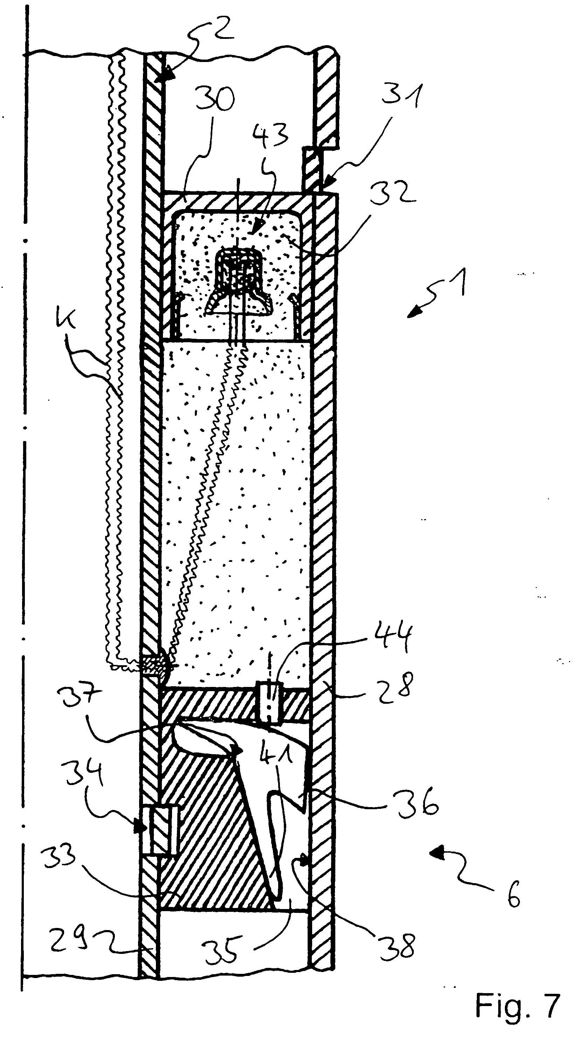

Die Fig. 7 zeigt die Funktion bei kleinen Fahrern. Hier drückt die Ladung 43 der pyrotechnische Patrone 32 den Innenrohr-Ringkolben 33 verbunden mit dem Lenksäuleninnenrohr 29 nach unten und damit von einem Insassen (nicht gezeigt) weg. Gleichzeitig verhindert ein vom Druck beaufschlagter Steuerstift 44 das Kippen des Schneidemessers 36 in die Stellung "Lastaufnahme", d.h. zur Spanabhebung in der Wandung 38 des Lenksäulenaussenrohrs 28 der Lenksäule 1.

Zusammenfassend läßt sich das in den Fig. 6 bis 8 verdeutlichte Ausführungsbeispiel der vorliegenden Erfindung folgendermaßen erläutern:

Ineinander schiebbare Lenksäulenrohre sind mit "Ringkolben" versehen, die bei kleinen Fahrern mittels eines pyrotechnischen Druckaufbaues dazwischen die Lenksäule verkürzen und damit einen sich aufblasenden Airbag auf eine größere Distanz bringen. In einem der Ringkolben ist eine lastaufnehmende Mechanik eingebaut, die bei großen Fahrern anstelle der Lenksäulenverkürzung wirksam wird und bei kleinen Fahrern mittels pyrotechnischem Druck außer Funktion gesetzt wird. Der zweite Ringkolben ist mit einer Lastaufnahmemechanik versehen. Im gezeigten Beispiel handelt es sich um entsprechend geformte und gelagerte kippbare Messer. Es kann sich hier ebenso um Wellrohre, materialverformende Kugeln o.ä. handeln (in den Figuren nicht gezeigt). Grundsätzlich ist die Funktion des lastaufnehmenden Ringkolbens derart, daß er automatisch Last aufnimmt und abbaut, wenn das innere Lenksäulenrohr relativ zum äußeren bewegt wird. Im gezeigten Fall wird das Messer spanabhebend in das äußere Lenksäulenrohr gedrückt. Alternativ kann diese Lastaufnahme bei einer pyrotechnischen Zündung bei entsprechender Leistung "überspielt" werden, oder wird das "Messer" wie im Beispiel durch einen druckbeaufschlagten Steuerstift außer Funktion gekippt.

Bei der Lenksäule eines Automobiles ist das innere und äußere Lenksäulenrohr beispielsweise auf möglichst großen Durchmesserunterschied ausgelegt. Wie es heute u.a. üblich ist, wird das äußere Lenksäulenrohr in Lagern positioniert (in den Figuren nicht gezeigt). Das innere Lenksäulenrohr ist zum äußeren formschlüssig mit entsprechenden Ringkolben (Nuten/Form) verbunden. Das Ringkolbenpaar ist z.B. durch Verclinchen mit je einem äußeren und je einem inneren Rohr verbunden. Ein Ringkolben beinhaltet eine pyrotechnische Ladung, deren Druck die Ringkolben voneinander weg drücken und damit die Lenksäule verkürzen bzw. das Lenkrad in Fahrtrichtung nach vom vom Insassen weg ziehen kann.

Kleine Fahrer können auch bei dem zweiten Ausführungsbeispiel festgestellt werden z.B. durch entsprechende elektronische Überwachungssysteme oder eine Sitzpositionserkennung mittels Schaltern in der Sitzschiene.

## Patentansprüche

1. Lenksäule für ein Fahrzeug, mit Verstelleinrichtungen (3), die im Falle eines Unfalls auslösbar sind, um zumindest einen Lenkrad-Endbereich (2) der Lenksäule (1) von einem Insassen weg zu bewegen, wobei die Verstelleinrichtungen (3) Lastaufnahmeeinrichtungen (7) zum Dämpfen einer Bewegung zumindest des Lenkrad-Endbereiches (2) der Lenksäule (1) von einem Insassen weg enthalten und für wenigstens zwei Betriebsmodi ausgelegt sind, und wobei eine Steuerung (5) zum Erfassen von Insassenparametern mittels Detektionseinrichtungen (6) und Auslösen eines Betriebsmodus der Verstelleinrichtungen (3) in Abhängigkeit von den Insassenparametern vorgesehen ist, wobei
die Lastaufnahmeeinrichtungen (7) Deformationseinrichtungen (D) enthalten, die mittels der Steuerung (5) in Abhängigkeit von den Insassenparametern zur Realisierung eines bestimmten Betriebsmodus der Verstelleinrichtungen (3) in oder auser Wirkung bringbar sind, und **dadurch gekennzeichnet, dass**
die Deformationseinrichtungen (D) wenigstens ein längs eines Bewegungsweges zur Lastaufnahme spanabhebendes Schneidmesser (36) enthalten, das durch Kippen wahlweise in eine Lastaufnahmestellung bringbar ist.

2. Lenksäule nach Anspruch 1, **dadurch gekennzeichnet, dass** jedes Schneidmesser (36) auf einem Kipppunkt (37) gelagert ist, so dass es bei Antrieb der Verstelleinrichtungen (3) gezielt einschneidet.

3. Lenksäule nach Anspruch 2, **dadurch gekennzeichnet, dass** jedes Schneidmesser (36) in einem Schlitz (35) eines Innenrohr-Ringkolbens (33) der Lenksäule (1) derart auf einem Kipppunkt (37) gelagert ist, dass es bei Antrieb der Verstelleinrichtungen (3) über den Innenrohr-Ringkolben (33) gezielt in eine Wandung (38) eines Lenksäulenaussenrohrs (28) der Lenksäule (1) einschneidet.

4. Lenksäule nach einem der vorhergehenden Ansprüche, **dadurch gekennzeichnet, dass** jedem Schneidmesser (36) ein Anschlag (41) zugeordnet ist, durch den die Schneidtiefe (39) des Spanes (40) bestimmt ist.

5. Lenksäule nach einem der vorhergehenden Ansprüche, **dadurch gekennzeichnet, dass** für das wenigstens eine Schneidmesser (36) ein druckbeaufschlagter Steuerstift (44) vorgesehen ist, durch den das Kippen des Schneidemessers (36) in die Lastaufnahmestellung verhinderbar ist.

6. Lenksäule nach einem der Ansprüche 1 bis 4, **dadurch gekennzeichnet, dass** für das wenigstens eine Schneidmesser (36) ein druckbeaufschlagter Steuerstift (44) vorgesehen ist, der ausgelegt ist, das Schneidmesser (36) außer Funktion zu kippen, um die Lastaufnahme zu überspielen.

7. Lenksäule nach einem der vorhergehenden Ansprüche, **dadurch gekennzeichnet,**
**dass** die Verstelleinrichtungen (3) Antriebseinrichtungen (23) zum Bewirken der Bewegung zumindest des Lenkrad-Endbereiches (2) der Lenksäule (1) von einem Insassen weg enthalten, und
**dass** die Antriebseinrichtungen (23) im Falle eines Unfalls von der Steuerung (5) in Abhängigkeit von den Insassenparametern auslösbar sind.

8. Lenksäule nach Anspruch 7, **dadurch gekennzeichnet, dass** die Antriebseinrichtungen einen pyrotechnischen Gasgenerator (20; 32) enthalten und/oder elektrisch auslösbar sind.

9. Lenksäule nach einem der vorhergehenden Ansprüche, **dadurch gekennzeichnet,**
**dass** die Verstelleinrichtungen (3) Lastaufnahmeeinrichtungen (7) zum Dämpfen einer Bewegung zumindest des Lenkrad-Endbereiches (2) der Lenksäule (1) von einem Insassen weg enthalten, und
**dass** die Lastaufnahmeeinrichtungen (7) im Falle eines Unfalls von der Steuerung (5) in Abhängigkeit von den Insassenparametern direkt oder indirekt betreibbar sind.

10. Lenksäule nach Anspruch 9, **dadurch gekennzeichnet, dass** die Lastaufnahmeeinrichtungen (7) wenigstens zwei Stufen (A, B) enthalten, die im Falle eines Unfalls von der Steuerung (5) in Abhängigkeit von den Insassenparametern direkt oder indirekt betreibbar sind,

11. Lenksäule nach Anspruch 10, **dadurch gekennzeichnet, dass** die Stufen (A, B) der Lastaufnahmeeinrichtungen (7) einzeln oder gleichzeitig mit addierten Lastaufnahmeeigenschaften betreibbar sind.

12. Lenksäule nach Anspruch 11, **dadurch gekennzeichnet, dass** die Stufen (A, B) der Lastaufnahmeeinrichtungen (7) jeweils unterschiedliche Lastaufnahmeeigenschaften aufweisen.

13. Lenksäule nach einem der Ansprüche 9 bis 12, **dadurch gekennzeichnet, dass** die Lastaufnahmeeinrichtungen (7) oder ggf. jede Stufe (A, B) davon einzeln im Falle eines Unfalls von der Steuerung (5) in Abhängigkeit von den Insassenparametern direkt oder indirekt abschaltbar sind.

14. Lenksäule nach einem der Ansprüche 9 bis 13, **dadurch gekennzeichnet, dass** die Lastaufnahmeeinrichtungen (7) oder ggf. eine Stufe (A, B) davon Deformationseinrichtungen (D) mit längs eines Bewegungsweges spanabhebenden Schneidmessern (36) enthalten, und/oder Bremseinrichtungen enthalten.

15. Lenksäule nach Anspruch 14, **dadurch gekennzeichnet, dass** die Bremseinrichtungen einen Bremsschlitten enthalten.

16. Lenksäule nach Anspruch 15, **dadurch gekennzeichnet, dass** der Bremsschlitten wenigstens zwei Bremskraftstufen aufweist.

17. Lenksäule nach einem der vorhergehenden Ansprüche, **dadurch gekennzeichnet, dass** die Steuerung (5) zum Erfassen der Sitzposition, des Angurtzustandes, der Grösse, des Gewichts und/oder der Körperhaltung des Insassen mittels der Detektionseinrichtungen (6) ausgelegt ist.

18. Lenksäule nach Anspruch 17 in Verbindung mit einem der Ansprüche 7 oder 8, **dadurch gekennzeichnet, dass** die Steuerung (5) zum Auslösen der Antriebseinrichtungen (23) in Abhängigkeit von der Sitzposition des Insassen ausgelegt ist.

19. Lenksäule nach Anspruch 18, **dadurch gekennzeichnet, dass** die Steuerung (5) zum Erfassen eines vorgebbaren Abstandes oder einer Unterschreitung eines vorgebbaren Abstandes der Position des Sitzes (4) für den Insassen vom Lenkrad mittels der Detektionseinrichtungen (6) ausgelegt ist.

20. Lenksäule nach Anspruch 19, **dadurch gekennzeichnet, dass** die Steuerung (5) zum Auslösen eines solchen Betriebsmodus der Verstelleinrichtungen (3) ausgelegt ist, bei dem im Falle eines Unfalls bei einem erfaßten vorgebbaren Abstand oder einer erfaßten Unterschreitung eines vorgebbaren Abstandes der Position des Sitzes (4) für den Insassen vom Lenkrad die Antriebseinrichtungen (23) der Verstelleinrichtungen (3) ausgelöst werden.

21. Lenksäule nach Anspruch 19 oder 20 in Verbindung mit einem der Ansprüche 9 bis 16,
**dadurch gekennzeichnet, dass** die Steuerung (5) zum Betreiben der Lastaufnahmeeinrichtungen (7) oder ggf. jeder Stufe (A, B) davon einzeln in Abhängigkeit vom Angurtzustand und/oder der Sitzposition des Insassen ausgelegt ist.

22. Lenksäule nach Anspruch 21, **dadurch gekennzeichnet, dass** die Steuerung (5) zum Auslösen eines solchen Betriebsmodus der Verstelleinrichtungen (3) ausgelegt ist, bei dem im Falle eines Unfalls bei einem nicht angegurteten Insassen die Lastaufnahmeeinrichtungen (7) oder zumindest eine Stufe (A, B) davon wirksam sind/ist.

23. Lenksäule nach Anspruch 21 oder 22, **dadurch gekennzeichnet, dass** die Steuerung (5) zum Auslösen eines solchen Betriebsmodus der Verstelleinrichtungen (3) ausgelegt ist, bei dem im Falle eines Unfalls bei einem erfaßten vorgebbaren Abstand oder einer erfaßten Unterschreitung eines vorgebbaren Abstandes der Position des Sitzes (4) für den Insassen vom Lenkrad die Lastaufnahmeeinrichtungen (7) oder zumindest eine Stufe (A, B) davon unwirksam sind/ist.

24. Lenksäule nach einem der vorhergehenden Ansprüche, **dadurch gekennzeichnet, dass** die Detektionseinrichtungen (6) Positionserkennungseinrichtungen (16) des Sitzes (4) für den Insassen, Zustandserkennungseinnchtungen (13) des Gurtschlosses (14) für den Anschnallgurt des Insassen, Grössen-, Gewichts- und/oder Körperhaltungserkennungseinrichtungen bezüglich des Insassen enthalten.

25. Lenksäule nach Anspruch 24, **dadurch gekennzeichnet, dass** die Positionserkennungseinrichtungen (16) des Sitzes (4) für den Insassen wenigstens einen elektrischen oder optischen Schalter (17) in oder im Zusammenhang mit Sitzführungsschienen (18) enthalten, und/oder dass die Zustandserkennungseinrichtungen (13) des Gurtschlosses (14) für den Anschnallgurt des Insassen wenigstens einen elektrischen oder optischen Schloßnutzungsschalter (15) enthalten.

26. Verstellverfahren für eine Lenksäule (1) eines Fahrzeuges,
wobei im Falle eines Unfalls zumindest ein Lenkrad-Endbereich (2) der Lenksäule (1) mittels Verstelleinrichtungen (3) von einem Insassen weg bewegt wird,
wobei mittels Detektionseinrichtungen (6) Insassenparameter erfaßt werden, und
wobei die Bewegung zumindest des Lenkrad-Endbereiches (2) der Lenksäule (1) vom Insassen weg mittels einer Steuerung (5) in Abhängigkeit von den Insassenparametern gemäß einem Betriebsmodus von mehreren Betriebsmodi der Verstelleinrichtungen (3)
erfolgt, wobei
zur Realisierung eines bestimmten Betriebsmodus der Verstelleinrichtungen (3) mittels der Steuerung (5) in Abhängigkeit von den Insassenparametern Deformationseinrichtungen (D) zur bewegungsdämpfenden Lastaufnahme in oder ausser Wirkung gebracht werden, und **dadurch gekennzeichnet, dass** wenn die Deformationseinrichtungen wirksam sind, im Falle eines Unfalls wenigstens spanabhebendes Schneidmesser (36) der Deformationseinrichtungen (D) zur bewegungsdämpfenden Lastaufnahme längs eines Bewegungsweges durch Kippen in eine Lastaufnahmestellung verstellt wird.

27. Verstellverfahren für eine Lenksäule nach Anspruch 26, **dadurch gekennzeichnet, dass** jedes Schneidmesser (36) auf einem Kipppunkt (37) gelagert ist, so dass es bei Antrieb der Verstelleinrichtungen (3) gezielt einschneidet.

28. Verstellverfahren für eine Lenksäule nach Anspruch 27, **dadurch gekennzeichnet, dass** jedes Schneidmesser (36) in einem Schlitz (35) eines Innenrohr-Ringkolbens (33) der Lenksäule (1) derart auf einem Kipppunkt (37) gelagert ist, dass es bei Antrieb der Verstelleinrichtungen (3) über den Innenrohr-Ringkolben (33) gezielt in eine Wandung (38) eines Lenksäulenaussenrohrs (28) der Lenksäule (1) einschneidet.

29. Verstellverfahren für eine Lenksäule nach einem der Ansprüche 26 bis 28, **dadurch gekennzeichnet, dass** die Schneidtiefe (39) des Spanes (40) jedes Schneidmessers (36) durch einen Anschlag (41) bestimmt ist.

30. Verstellverfahren für eine Lenksäule nach einem der Ansprüche 26 bis 29, **dadurch gekennzeichnet, dass** das Kippen des Schneidemessers (36) in die Lastaufnahmestellung durch einen druckbeaufschlagten Steuerstift (44) verhindert wird.

31. Verstellverfahren für eine Lenksäule nach einem der Ansprüche 26 bis 29, **dadurch gekennzeichnet, dass** das wenigstens eine Schneidmesser (36) durch einen druckbeaufschlagten Steuerstift (44) außer Funktion gekippt wird, um die Lastaufnahme zu überspielen.

32. Verstellverfahren für eine Lenksäule nach einem der Ansprüche 26 bis 31, **dadurch gekennzeichnet, dass** ein Antrieb der Verstelleinrichtungen (3) zum Bewirken der Bewegung zumindest des Lenkrad-Endbereiches (2) der Lenksäule (1) vom Insassen weg im Falle eines Unfalls in Abhängigkeit von den Insassenparametern ausgelöst wird.

33. Verstellverfahren für eine Lenksäule nach einem der Ansprüche 26 bis 32, **dadurch gekennzeichnet, dass** eine Bewegung zumindest des Lenkrad-Endbereiches (2) der Lenksäule (1) von einem Insassen weg im Falle eines Unfalls in Abhängigkeit von den Insassenparametern gedämpft wird.

34. Verstellverfahren für eine Lenksäule nach Anspruch 33, **dadurch gekennzeichnet, dass** eine Dämpfung der Bewegung zumindest des Lenkrad-Endbereiches (2) der Lenksäule (1) von einem Insassen weg im Falle eines Unfalls in Abhängigkeit von den Insassenparametern abgeschaltet wird.

35. Verstellverfahren für eine Lenksäule nach Anspruch 33, **dadurch gekennzeichnet, dass** das Abschalten der Dämpfung der Bewegung zumindest des Lenkrad-Endbereiches (2) der Lenksäule (1) von einem Insassen weg im Falle eines Unfalls in Abhängigkeit von den Insassenparametern wahlweise in einzelnen Stufen (A, B) abgeschaltet wird.

36. Verstellverfahren für eine Lenksäule nach einem der Ansprüche 26 bis 35, **dadurch gekennzeichnet, dass** die Sitzposition, der Angurtzustand, die Grösse, das Gewicht und/oder die Körperhaltung des Insassen als Insassenparameter erfaßt werden/wird.

37. Verstellverfahren für eine Lenksäule nach Anspruch 36, **dadurch gekennzeichnet, dass** die Verstelleinrichtungen (3) in Abhängigkeit von der Sitzposition des Insassen angetrieben werden.

38. Verstellverfahren für eine Lenksäule nach Anspruch 37, **dadurch gekennzeichnet, dass** die Verstelleinrichtungen (3) im Falle eines Unfalls bei einem erfaßten vorgebbaren Abstand oder einer erfaßten Unterschreitung eines vorgebbaren Abstandes der Position des Sitzes (4) für den Insassen vom Lenkrad gemäß einem Betriebsmodus nicht angetrieben werden.

39. Verstellverfahren für eine Lenksäule nach einem der Ansprüche 36 bis 38, **dadurch gekennzeichnet, dass** die Verstelleinrichtungen (3) in Abhängigkeit vom Angurtzustand und/oder von der Sitzposition des Insassen gedämpft werden.

40. Verstellverfahren für eine Lenksäule nach Anspruch 39, **dadurch gekennzeichnet, dass** die Verstelleinrichtungen (3) im Falle eines Unfalls bei einem nicht angegurteten Insassen gemäß einem Betriebsmodus ganz oder teilweise gedämpft werden.

41. Verstellverfahren für eine Lenksäule nach Anspruch 39 oder 40, **dadurch gekennzeichnet, dass** die Verstelleinrichtungen (3) im Falle eines Unfalls bei einem erfaßten vorgebbaren Abstand oder einer erfaßten Unterschreitung eines vorgebbaren Abstandes der Position des Sitzes (4) für den Insassen vom Lenkrad gemäß einem Betriebsmodus ganz oder teilweise gedämpft werden.

## Claims

1. Steering column for a vehicle, having adjusting devices (3) which can be triggered in the event of an accident, in order at least to move a steering wheel end region (2) of the steering column (1) away from an occupant, wherein the adjusting devices (3) contain load absorbing devices (7) to damp a movement at least of the steering wheel end region (2) of the steering column (1) away from an occupant and are designed for at least two operating modes, and wherein a controller (5) is provided in order to detect occupant parameters by means of detection devices (6) and to trigger an operating mode of the adjusting devices (3) in dependence upon the occupant parameters, wherein the load absorbing devices (7) contain deformation devices (D) which can be activated or deactivated by means of the controller (5) in dependence upon the occupant parameters to implement a specific operating mode of the adjusting devices (3), and **characterised in that** the deformation devices (D) contain at least one cutter (36) which cuts along a movement path for the purpose of load absorbance and which can be moved optionally to a load absorbing position by tilting.

2. Steering column as claimed in claim 1, **characterised in that** each cutter (36) is mounted on a tilting point (37), so that it cuts in a purposeful manner as the adjusting devices (3) are driven.

3. Steering column as claimed in claim 2, **characterised in that** each cutter (36) is mounted in a slot (35) of an inner tube-annular piston (33) of the steering column (1) in such a manner on a tilting point (37) that as the adjusting devices (3) are driven the cutter cuts via the inner tube-annular piston (33) in a purposeful manner into a wall (38) of a steering column-outer tube (28) of the steering column (1).

4. Steering column as claimed in any one of the preceding claims, **characterised in that** each cutter (36) is allocated a stop (41) which serves to determine the cutting depth (39) of the cutting (40).

5. Steering column as claimed in any one of the preceding claims, **characterised in that** for the at least one cutter (36) there is provided a pressure-influenced control pin (44) which prevents the cutter (36) from tilting into the load absorbing position.

6. Steering column as claimed in any one of claims 1 to 4, **characterised in that** for the at least one cutter (36) there is provided a pressure-influenced control pin (44) which is designed to tilt the cutter (36) out of operation in order to balance out the load absorbance.

7. Steering column as claimed in any one of the preceding claims, **characterised in that** the adjusting devices (3) contain drive devices (23) to effect movement of at least the steering wheel end region (2) of the steering column (1) away from an occupant, and that in the event of an accident the drive devices (23) can be triggered by the controller (5) in dependence upon the occupant parameters.

8. Steering column as claimed in claim 7, **characterised in that** the drive devices contain a pyrotechnical gas generator (20; 32) and/or can be triggered electrically.

9. Steering column as claimed in any one of the preceding claims, **characterised in that** the adjusting devices (3) contain load absorbing devices (7) to damp a movement at least of the steering wheel end region (2) of the steering column (1) away from an occupant, and that in the event of an accident the load absorbing devices (7) can be operated directly or indirectly by the controller (5) in dependence upon the occupant parameters.

10. Steering column as claimed in claim 9, **characterised in that** the load absorbing devices (7) contain at least two stages (A, B) which in the event of an accident can be operated directly or indirectly by the controller (5) in dependence upon the occupant parameters.

11. Steering column as claimed in claim 10, **characterised in that** the stages (A, B) of the load absorbing devices (7) can be operated individually or simultaneously with added load absorbing properties.

12. Steering column as claimed in claim 11, **characterised in that** the stages (A, B) of the load absorbing devices (7) each comprise different load absorbing properties.

13. Steering column as claimed in any one of claims 9 to 12, **characterised in that** in the event of an accident the load absorbing devices (7) or, where appropriate, each stage (A, B) thereof can be individually switched off directly or indirectly by the controller (5) in dependence upon the occupant parameters.

14. Steering column as claimed in any one of claims 9 to 13, **characterised in that** the load absorbing devices (7) or, where appropriate, a stage (A, B) thereof contain deformation devices (D) having cutters (36) cutting along a movement path, and/or contain braking devices.

15. Steering column as claimed in claim 14, **characterised in that** the braking devices contain a brake carriage.

16. Steering column as claimed in claim 15, **characterised in that** the brake carriage comprises at least two braking force stages.

17. Steering column as claimed in any one of the preceding claims, **characterised in that** the controller (5) is designed to detect the seat position, the seatbelt status, the size, weight and/or posture of the occupant by means of the detection devices (6).

18. Steering column as claimed in claim 17 in conjunction with any one of claims 7 or 8, **characterised in that** the controller (5) is designed to trigger the drive devices (23) in dependence upon the occupant's seat position.

19. Steering column as claimed in claim 18, **characterised in that** the controller (5) is designed to detect a predeterminable distance or a distance less than a predeterminable distance of the position of the occupant's seat (4) from the steering wheel by means of the detection devices (6).

20. Steering column as claimed in claim 19, **characterised in that** the controller (5) is designed to trigger a particular operating mode of the adjusting devices (3), in which the drive devices (23) of the adjusting devices (3) are triggered in the event of an accident where a predeterminable distance of the position of the occupant's seat (4) from the steering wheel or a distance less than this is detected.

21. Steering column as claimed in claim 19 or 20 in conjunction with any one of claims 9 to 16, **characterised in that** the controller (5) is designed to operate the load absorbing devices (7) or, where appropriate, each stage (A, B) thereof individually in dependence upon the seatbelt status and/or the occupant's seat position.

22. Steering column as claimed in claim 21, **characterised in that** the controller (5) is designed to trigger a particular operating mode of the adjusting devices (3), in which in the event of an accident where the occupant is not wearing a seatbelt the load absorbing devices (7) or at least one stage (A, B) thereof is/are effective.

23. Steering column as claimed in claim 21 or 22, **characterised in that** the controller (5) is designed to trigger a particular operating mode of the adjusting devices (3), in which the load absorbing devices (7) or at least one stage (A, B) thereof is/are effective in the event of an accident where a predeterminable distance of the position of the occupant's seat (4) from the steering wheel or a distance less than this is detected.

24. Steering column as claimed in any one of the preceding claims, **characterised in that** the detection devices (6) contain position recognition devices (16) of the seat (4) for the occupant, status recognition devices (13) of the belt lock (14) for the occupant's seatbelt, size, weight and/or posture recognition devices in relation to the occupant.

25. Steering column as claimed in claim 24, **characterised in that** the position recognition devices (16) of the seat (4) for the occupant contain at least one electrical or optical switch (17) in or in conjunction with seat guide rails (18), and/or that the status recognition devices (13) of the belt lock (14) for the occupant's seatbelt contain at least one electrical or optical lock usage switch (15).

26. Method of adjusting a steering column (1) of a vehicle, wherein in the event of an accident at least one steering wheel end region (2) of the steering column (1) is moved away from an occupant by means of adjusting devices (3), wherein by means of detection devices (6) occupant parameters are detected and wherein the movement at least of the steering wheel end region (2) of the steering column (1) away from the occupant is performed by means of a controller (5) in dependence upon the occupant parameters in accordance with one operating mode of several operating modes of the adjusting devices (3), wherein in order to implement a specific operating mode of the adjusting devices (3), deformation devices (D) for absorbing loads in such a way as to damp movement are activated or deactivated by means of the controller (5) in dependence upon the occupant parameters, and
**characterised in that** if the deformation devices are effective, in the event of an accident at least cutting cutter (36) of the deformation devices (D) for absorbing loads in such a manner as to damp movement is displaced along a movement path by being tilted to a load absorbing position.

27. Method of adjusting a steering column as claimed in claim 26, **characterised in that** each cutter (36) is mounted on a tilting point (37), so that it cuts in a purposeful manner as the adjusting devices (3) are driven.

28. Method of adjusting a steering column as claimed in claim 27, **characterised in that** each cutter (36) is mounted in a slot (35) of an inner tube-annular piston (33) of the steering column (1) in such a manner on a tilting point (37) that as the adjusting devices (3) are driven, said cutter cuts via the inner tube-annular piston (33) in a purposeful manner into a wall (38) of a steering column-outer tube (28) of the steering column (1).

29. Method of adjusting a steering column as claimed in any one of claims 26 to 28, **characterised in that** the cutting depth (39) of the cutting (40) of each cutter (36) is determined by a stop (41).

30. Method of adjusting a steering column as claimed in any one of claims 26 to 29, **characterised in that** the cutter (36) is prevented by means of a pressure-influenced control pin (44) from tilting to the load absorbing position.

31. Method of adjusting a steering column as claimed in any one of claims 26 to 29, **characterised in that** the at least one cutter (36) is tilted out of operation by means of a pressure-influenced control pin (44), in order to balance out the load absorbance.

32. Method of adjusting a steering column as claimed in any one of claims 26 to 31, **characterised in that** a drive of the adjusting devices (3) to effect the movement at least of the steering wheel end region (2) of the steering column (1) away from the occupant in the event of an accident is triggered in dependence upon the occupant parameters.

33. Method of adjusting a steering column as claimed in any one of claims 26 to 32, **characterised in that** a movement at least of the steering wheel end region (2) of the steering column (1) away from an occupant in the event of an accident is damped in dependence upon the occupant parameters.

34. Method of adjusting a steering column as claimed in claim 33, **characterised in that** the damping of the movement at least of the steering wheel end region (2) of the steering column (1) away from an occupant in the event of an accident is switched off in dependence upon the occupant parameters.

35. Method of adjusting a steering column as claimed in claim 33, **characterised in that** the procedure of switching off the damping of the movement at least of the steering wheel end region (2) of the steering column (1) away from an occupant in the event of an accident is switched off optionally in individual stages (A, B) in dependence upon the occupant parameters.

36. Method of adjusting a steering column as claimed in any one of claims 26 to 35, **characterised in that** the seat position, the seatbelt status, the size, weight and/or posture of the occupant is/are detected as occupant parameters.

37. Method of adjusting a steering column as claimed in claim 36, **characterised in that** the adjusting devices (3) are driven in dependence upon the occupant's seat position.

38. Method of adjusting a steering column as claimed in claim 37, **characterised in that** the adjusting devices (3) are not driven in accordance with an operating mode in the event of an accident where a predeterminable distance of the position of the occupant's seat (4) from the steering wheel or a distance less than this is detected.

39. Method of adjusting a steering column as claimed in any one of claims 36 to 38, **characterised in that** the adjusting devices (3) are damped in dependence upon the seatbelt status and/or upon the occupant's seat position.

40. Method of adjusting a steering column as claimed in claim 39, **characterised in that** in the event of an accident where the occupant is not wearing a seatbelt, the adjusting devices (3) are completely or partially damped in accordance with an operating mode.

41. Method of adjusting a steering column as claimed in claim 39 or 40, **characterised in that** the adjusting devices (3) are completely or partially damped in accordance with an operating mode in the event of an accident where a predeterminable distance of the position of the occupant's seat (4) from the steering wheel or a distance less than this is detected.

## Revendications

1. Colonne de direction pour véhicule, comportant des dispositifs de réglage (3) qui peuvent être déclenchés en cas d'accident pour déplacer au moins une région terminale côté volant de direction (2) de la colonne de direction (1) en éloignement d'un passager, les dispositifs de réglage (3) comprenant des dispositifs d'encaissement de charge (7) pour amortir un mouvement au moins de la région terminale côté volant de direction (2) de la colonne de direction (1) en éloignement d'un passager, et étant conçus pour au moins deux modes de fonctionnement, et une commande (5) étant prévue pour saisir des paramètres de passager au moyen de dispositifs de détection (6) et pour déclencher un mode de fonctionnement des dispositifs de réglage (3) en fonction des paramètres de passager, les dispositifs d'encaissement de charge (7) comprenant des dispositifs de déformation (D) qui peuvent être activés ou désactivés au moyen de la commande (5) en fonction des paramètres de passager pour réaliser un mode de fonctionnement déterminé des dispositifs de réglage (3), **caractérisée en ce que** les dispositifs de déformation (D) comprennent au moins une lame (36) enlevant de la matière au moins le long d'une course de mouvement en vue de l'encaissement de charge, lame qui peut être amenée par basculement de manière sélective jusque dans une position d'encaissement de charge.

2. Colonne de direction selon l'une des revendications 1, **caractérisée en ce que** chaque lame (36) est montée sur un point de basculement (37) de telle sorte qu'elle fait une entaille de manière ciblée lors de l'entraînement des dispositifs de réglage (3).

3. Colonne de direction selon la revendication 2, **caractérisée en ce que** chaque lame (36) est montée dans une fente (35) d'un piston annulaire de tube intérieur (33) de la colonne de direction (1), de telle sorte que lors de l'entraînement des dispositifs de réglage (3) via le piston annulaire (33) de tube intérieur, elle fait une entaille de manière ciblée dans une paroi (38) d'un tube extérieur (28) de la colonne de direction (1).

4. Colonne de direction selon l'une des revendications précédentes, **caractérisée en ce qu'**une butée (41), qui détermine la profondeur de coupe (39) de la matière enlevée (40), est associée à chaque lame (36).

5. Colonne de direction selon l'une des revendications précédentes, **caractérisée en ce qu'**on prévoit pour ladite au moins une lame (36) un pion de commande (44) sollicité par pression qui permet d'empêcher le basculement de la lame (36) jusque dans la position d'encaissement de charge.

6. Colonne de direction selon l'une des revendications 1 à 4, **caractérisée en ce qu'**on prévoit pour ladite au moins une lame (36) un pion de commande (44) sollicité par pression qui est conçu de telle manière que la lame (36) est basculée hors de fonctionnement pour contourner l'encaissement de charge.

7. Colonne de direction selon l'une des revendications précédentes, **caractérisée en ce que** les dispositifs de réglage (3) comprennent des dispositifs d'entraînement (23) pour provoquer le mouvement au moins de la région terminale côté volant de direction (2) de la colonne de direction (1) en éloignement d'un passager, et **en ce que** les dispositifs d'entraînement (23) peuvent être déclenchés, en cas d'accident, par la commande (5) en fonction des paramètres de passager.

8. Colonne de direction selon la revendication 7, **caractérisée en ce que** les dispositifs d'entraînement comprennent un générateur de gaz (20 ; 32) pyrotechnique et/ou peuvent être déclenchés électriquement.

9. Colonne de direction selon l'une des revendications précédentes, **caractérisée en ce que** les dispositifs de réglage (3) comprennent des dispositifs d'encaissement de charge (7) pour amortir un mouvement au moins de la région terminale côté volant de direction (2) de la colonne de direction (1) en éloignement d'un passager, et **en ce qu'**en cas d'accident, la commande (5) peut faire fonctionner directement ou indirectement les dispositifs d'encaissement de charge (7) en fonction des paramètres de passager.

10. Colonne de direction selon la revendication 9, **caractérisée en ce que** les dispositifs d'encaissement de charge (7) comprennent au moins deux étages (A, B) que la commande (5), en cas d'accident, peut faire fonctionner directement ou indirectement en fonction des paramètres de passager.

11. Colonne de direction selon la revendication 10, **caractérisée en ce que** les étages (A, B) des dispositifs d'encaissement de charge (7) peuvent fonctionner individuellement ou simultanément avec des propriétés d'encaissement de charge cumulées.

12. Colonne de direction selon la revendication 11, **caractérisée en ce que** les étages (A, B) des dispositifs d'encaissement de charge (7) présentent chacun des propriétés d'encaissement de charge différentes.

13. Colonne de direction selon l'une des revendications 9 à 12, **caractérisée en ce que** les dispositifs d'encaissement de charge (7) ou éventuellement chaque étage (A, B) de ceux-ci peuvent, en cas d'accident, être arrêtés individuellement, directement ou indirectement, par la commande (5) en fonction des paramètres de passager.

14. Colonne de direction selon l'une des revendications 9 à 13, **caractérisée en ce que** les dispositifs d'encaissement de charge (7) ou éventuellement un étage (A, B) de ceux-ci comprennent des dispositifs de déformation (D) avec des lames (36) enlevant de la matière le long d'une course de mouvement, et/ou comprennent des dispositifs de freinage.

15. Colonne de direction selon la revendication 14, **caractérisée en ce que** les dispositifs de freinage comprennent un chariot de freinage.

16. Colonne de direction selon la revendication 15, **caractérisée en ce que** le chariot de freinage présente au moins deux étages de force de freinage.

17. Colonne de direction selon l'une des revendications précédentes, **caractérisée en ce que** la commande (5) est conçue pour saisir la position assise, l'état d'attachement de la ceinture de sécurité, la taille, le poids et/ou la tenue du passager au moyen des dispositifs de détection (6).

18. Colonne de direction selon la revendication 17 en liaison avec l'une ou l'autre des revendications 7 et 8, **caractérisée en ce que** la commande (5) est conçue pour déclencher les dispositifs d'entraînement (23) en fonction de la position assise du passager.

19. Colonne de direction selon la revendication 18, **caractérisée en ce que** la commande (5) est conçue pour saisir une distance prédéterminable ou un passage au-dessous d'une distance prédéterminable entre la position du siège (4) pour le passager et le volant de direction, au moyen des dispositifs de détection (6).

20. Colonne de direction selon la revendication 19, **caractérisée en ce que** la commande (5) est conçue pour déclencher un mode de fonctionnement des dispositifs de réglage (3) dans lequel, en cas d'accident et lorsqu'on saisit une distance prédéterminable ou un passage au-dessous d'une distance prédéterminable entre la position du siège (4) pour le passager et le volant de direction, les dispositifs d'entraînement (23) des dispositifs de réglage (3) sont déclenchés.

21. Colonne de direction selon l'une ou l'autre des revendications 19 et 20 en liaison avec l'une des revendications 9 à 16, **caractérisée en ce que** la commande (5) pour faire fonctionner les dispositifs d'encaissement de charge (7) ou éventuellement chaque étage (A, B) de ceux-ci est conçue individuellement en fonction de l'état d'attachement de la ceinture de sécurité et/ou de la position assise du passager.

22. Colonne de direction selon la revendication 21, **caractérisée en ce que** la commande (5) est conçue pour déclencher un mode de fonctionnement des dispositifs de réglage (3), dans lequel, en cas d'accident et lorsqu'un passager n'a pas attaché sa ceinture de sécurité, les dispositifs d'encaissement de charge (7) ou au moins un étage (A, B) de ceux-ci sont/est actifs/actif.

23. Colonne de direction selon l'une ou l'autre des revendications 21 et 22, **caractérisée en ce que** la commande (5) est conçue pour déclencher un mode de fonctionnement des dispositifs de réglage (3), dans lequel, en cas d'accident et lorsqu'on saisit une distance prédéterminable ou un passage au-dessous d'une distance prédéterminable entre la position du siège (4) pour le passager et le volant de direction, les dispositifs d'encaissement de charge (7) ou au moins un étage (A, B) de ceux-ci sont/est actifs/actif.

24. Colonne de direction selon l'une des revendications précédentes, **caractérisée en ce que** les dispositifs de détection (6) comprennent des dispositifs de reconnaissance de position (16) du siège (4) pour le passager, des dispositifs de reconnaissance d'état (13) de la serrure (14) de la ceinture de sécurité du passager, des dispositifs de reconnaissance de la taille, du poids et/ou de la tenue du passager.

25. Colonne de direction selon la revendication 24, **caractérisée en ce que** les dispositifs de reconnaissance de position (16) du siège (4) pour le passager comprennent au moins un commutateur (17) électrique ou optique dans ou en rapport avec des rails de guidage de siège (18), et/ou **en ce que** les dispositifs de reconnaissance d'état (13) de la serrure (14) pour la ceinture de sécurité du passager comprennent au moins un commutateur d'utilisation de serrure (15) électrique ou optique.

26. Procédé de réglage pour une colonne de direction (1) d'un véhicule,
dans lequel en cas d'accident, au moins une région terminale côté volant de direction (2) de la colonne de direction (1) est éloignée d'un passager au moyen de dispositifs de réglage (3),
dans lequel des paramètres de passager sont saisis par des dispositifs de détection (6) et dans lequel le mouvement au moins de la région terminale côté volant de direction (2) de la colonne de direction (1) en éloignement du passager a lieu au moyen d'une commande (5) en fonction des paramètres de passager, selon un mode de fonctionnement parmi plusieurs modes de fonctionnement des dispositifs de réglage (3), dans lequel, pour réaliser un mode de fonctionnement déterminé des dispositifs de réglage (3) au moyen de la commande (5) en fonction des paramètres de passager, des dispositifs de déformation (D) sont activés ou désactivés pour encaisser la charge avec amortissement de mouvements,
**caractérisé en ce que** lorsque les dispositifs de déformation sont actifs, en cas d'accident, au moins une lame (36) enlevant de la matière, des dispositifs de déformation (D), est déplacée le long d'une course de mouvement par basculement jusque dans une position d'encaissement de charge en vue d'un encaissement de charge avec amortissement de mouvements.

27. Procédé de réglage pour une colonne de direction selon la revendication 26, **caractérisé en ce que** chaque lame (36) est montée sur un point de basculement (37) de telle sorte qu'elle fait une entaille de manière ciblée lors de l'entraînement des dispositifs de réglage (3).

28. Procédé de réglage pour une colonne de direction selon la revendication 27, **caractérisé en ce que** chaque lame (36) est montée dans une fente (35) d'un piston annulaire (33) de tube intérieur de la colonne de direction (1) et sur un point de basculement (37), de telle sorte que lors de l'entraînement des dispositifs de réglage (3) via le piston annulaire (33) de tube intérieur, elle fait une entaille de manière ciblée dans une paroi (38) d'un tube extérieur (28) de la colonne de direction (1).

29. Procédé de réglage pour une colonne de direction selon l'une des revendications 26 à 28, **caractérisé en ce qu'**une butée (41) détermine la profondeur de coupe (39) de la matière enlevée (40) par chaque lame (36).

30. Procédé de réglage pour une colonne de direction selon l'une des revendications 26 à 29, **caractérisé en ce que** le basculement de la lame (36) jusque dans la position d'encaissement de charge est empêché par un pion de commande (44) sollicité par pression.

31. Procédé de réglage pour une colonne de direction selon l'une des revendications 26 à 29, **caractérisé en ce que** ladite moins une lame (36) est basculée hors de fonctionnement par un pion de commande (44) sollicité par pression pour contourner l'encaissement de charge.

32. Procédé de réglage pour une colonne de direction selon l'une des revendications 26 à 31, **caractérisé en ce qu'**un entraînement des dispositifs de réglage (3) pour provoquer le mouvement au moins de la région terminale côté volant de direction (2) de la colonne de direction (1) en éloignement d'un passager est déclenché en cas d'accident en fonction des paramètres de passager.

33. Procédé de réglage pour une colonne de direction selon l'une des revendications 26 à 32, **caractérisé en ce qu'**un mouvement au moins de la région terminale côté volant de direction (2) de la colonne de direction (1) en éloignement d'un passager est amorti en cas d'accident en fonction des paramètres de passager.

34. Procédé de réglage pour une colonne de direction selon la revendication 33, **caractérisé en ce qu'**un amortissement du mouvement au moins de la région terminale côté volant de direction (2) de la colonne de direction (1) en éloignement d'un passager est arrêté en cas d'accident en fonction des paramètres de passager.

35. Procédé de réglage pour une colonne de direction selon la revendication 33, **caractérisé en ce que** l'arrêt de l'amortissement du mouvement au moins de la région terminale côté volant de direction (2) de la colonne de direction (1) en éloignement d'un passager a lieu en cas d'accident en fonction des paramètres de passager, sélectivement dans des étages individuels (A, B).

36. Procédé de réglage pour une colonne de direction selon l'une des revendications 26 à 35, **caractérisé en ce que** la position assise, l'état d'attachement de la ceinture de sécurité, la taille, le poids et/ou la tenue du passager sont saisis à titre de paramètres de passager.

37. Procédé de réglage pour une colonne de direction selon la revendication 36, **caractérisé en ce que** les dispositifs de réglage (3) sont entraînés en fonction de la position assise du passager.

38. Procédé de réglage pour une colonne de direction selon la revendication 37, **caractérisé en ce que**, en cas d'accident et lorsqu'on saisit une distance prédéterminable ou un passage au-dessous d'une distance prédéterminable entre la position du siège (4) pour le passager et le volant de direction, les dispositifs de réglage (3) ne sont pas entraînés, selon un mode de fonctionnement.

39. Procédé de réglage pour une colonne de direction selon l'une des revendications 36 à 38, **caractérisé en ce que** les dispositifs de réglage (3) sont amortis en fonction de l'état d'attachement de la ceinture de sécurité et/ou de la position assise du passager.

40. Procédé de réglage pour une colonne de direction selon la revendication 39, **caractérisé en ce que**, en cas d'accident et lorsqu'un passager n'a pas attaché sa ceinture de sécurité, les dispositifs de réglage (3) sont amortis totalement ou partiellement, selon un mode de fonctionnement.

41. Procédé de réglage pour une colonne de direction selon l'une ou l'autre des revendications 39 et 40, **caractérisé en ce que**, en cas d'accident et lorsqu'on saisit une distance prédéterminable ou un passage au-dessous d'une distance prédéterminable entre la position du siège (4) pour le passager et le volant de direction, les dispositifs de réglage (3) sont amortis totalement ou partiellement, selon un mode de fonctionnement.
